# EUROPEAN PATENT APPLICATION

(11) **EP 4 776 369 A1**
(43) Date of publication of application: **15.07.2026**
(21) Application number: 25867156.9
(22) Date of filing: 23.04.2025
(51) Int. Cl.: H01M 10/0525, H01M 4/131, H01M 4/136, H01M 4/133, H01M 4/134

(54) **HIGH-ENERGY-DENSITY LITHIUM-ION BATTERY**

(30) Priority: 08.11.2024 CN 202411596853
(71) Applicant: Eve Power Co., Ltd., Jingmen, Hubei 448000 (CN)
(72) Inventor: SHI, Zhongyang, Jingmen, Hubei 448000 (CN); LIU, Fanfen, Jingmen, Hubei 448000 (CN); LIU, Gang, Jingmen, Hubei 448000 (CN); LIU, Shihao, Jingmen, Hubei 448000 (CN)
(74) Representative: Michalski Hüttermann & Partner mbB
(86) International application number: PCT/CN2025/090697
(87) International publication number: WO 2026/097793

(57) **Abstract**

Embodiments of the present application provides a lithium-ion battery with high energy density. The lithium-ion battery with high energy density includes: a positive electrode sheet and a negative electrode sheet, where the positive electrode sheet includes a positive-electrode active material layer and the positive-electrode active material layer includes a positive-electrode active material, and where the negative electrode sheet includes a negative-electrode active material layer and the negative-electrode active material layer includes a negative-electrode active material, where the positive-electrode active material includes a lithium iron phosphate material and a lithium-rich material, and the negative-electrode active material includes a graphite material and a silicon negative electrode material.

## Description

This application claims priority to Chinese Patent Application No. 202411596853.6, filed November 8, 2024, the entire disclosure of which is hereby incorporated by reference.

### TECHNICAL FIELD

This disclosure relates to the field of lithium-ion battery technology, in particular to a lithium-ion battery with high energy density.

### BACKGROUND

In recent years, with the gradual consumption of traditional fossil energy and the increasingly serious global warming problem, people are increasingly aware of the importance of new energy in the future society. Among all the new energy systems, solar energy, wind energy, hydropower, nuclear energy, etc. do not have convenient mobility. While lithium-ion batteries, as a lightweight energy storage form, have their specific irreplaceable nature in practical applications and are therefore widely used.

The lithium-ion battery has the advantages of high energy density, low self-discharge, long cycle life, and safety and environmental protection, and are therefore widely used in consumer electronics, electric vehicles, power and communication energy storage, etc. According to the different positive electrode materials, the lithium-ion battery can include the lithium cobalt oxide battery, the lithium manganese oxide battery, the ternary lithium battery, and the lithium iron phosphate battery, etc., which respectively correspond to positive electrode materials: lithium cobalt oxide (LiCoO₂, LCO), lithium manganese oxide (LiMn₂O₄, LMO), ternary lithium nickel cobalt manganese oxide (NMC) and ternary lithium nickel cobalt aluminum oxide (NCA), and lithium iron phosphate (LiFePO₄, LFP). Lithium cobalt oxide (LCO) has the highest charge and discharge voltage, but the price of the main element Co is relatively high, which is mainly used in consumer electronics. Spinel lithium manganese oxide (LMO) is relatively cheap, but has slightly lower energy density and cycle life, which is mainly used in electric two-wheeled vehicles. Ternary lithium nickel cobalt manganese oxide (NMC) and ternary lithium nickel cobalt aluminum oxide (NCA) have higher energy density and price, and are mainly used as the power battery for the high-end passenger vehicle. The lithium iron phosphate (LFP) positive electrode material is widely used in the power battery for the passenger vehicle, the power battery for the commercial vehicle, and power&communication energy storage battery due to its stable structure, abundant reserves of the main elements Fe&P, low price, ultra-long cycle life, and high safety.

However, the current energy density of the LFP-graphite system is close to the design upper limit (180Wh/kg) of the conventional battery. Therefore, it is necessary to optimize the system to increase the energy density design upper limit of the lithium iron phosphate battery.

### TECHNICAL PROBLEM

The present application provides a high energy density lithium-ion battery, aiming to solve the problem of how to improve the energy density of the lithium battery while taking into account its rate performance and cycle performance.

### TECHNICAL SOLUTIONS

Embodiments of the present application provides a lithium-ion battery with high energy density. The lithium-ion battery with high energy density includes: a positive electrode sheet and a negative electrode sheet, where the positive electrode sheet includes a positive-electrode active material layer and the positive-electrode active material layer includes a positive-electrode active material, and where the negative electrode sheet includes a negative-electrode active material layer and the negative-electrode active material layer includes a negative-electrode active material, where the positive-electrode active material includes a lithium iron phosphate material and a lithium-rich material, and a mass fraction of the lithium-rich material in the positive-electrode active material is 0.2%~8%; the lithium iron phosphate (LFP) material has a chemical formula of Li₁₊ₓFe_{1-y}M_{y}(PO₄)_{1+z}, where 0≤x≤0.1, 0≤y≤0.01, 0≤z≤0.04; M includes at least one of Ti, V, Zr, Nb, Mg, Mo, W, or Al; the lithium-rich material includes at least one of LFO or LNO, where the LFO has a chemical formula of Li₅₊ₐFe_{1-b}Z_{b}O_{4+c}, where 0≤a≤0.5, 0≤b≤0.01, 0≤c≤0.03, and Z includes at least one of Ti, V, Zr, Nb, Mg, Mo, W, or Al; and the LNO has a chemical formula of Li_{2+d}Ni₁₋ₑYₑO_{2+f}, where - 0.5≤d≤0.5, e≥0, -0.5≤f≤0.5, and Y includes at least one of Ti, V, Al, Mg, Mn, or Fe; and the negative-electrode active material includes a graphite material and a silicon negative electrode material, and a mass fraction of the silicon negative electrode material in the negative-electrode active material is 1%~50%.

### ADVANTAGEOUS EFFECTS

The initial Coulombic efficiency of the lithium iron phosphate (LFP) material is relatively high (generally above 96%), while the initial Coulombic efficiency of the negative-electrode active material obtained by combining the graphite material and silicon negative electrode material is relatively low (generally below 90%). Therefore, the reversible (gram) capacity of the lithium battery is restricted by the initial Coulombic efficiency of the negative electrode.

Firstly, in the present application, the lithium-rich material is introduced into the positive-electrode active material. The high initial charge (gram) capacity of the lithium-rich material can compensate for the active lithium consumption caused by the formation of solid electrolyte interphase (SEI) film at the negative electrode in the initial charge process, to increase the amount of active lithium de-intercalation at the negative electrode in the discharge process, thereby increasing the reversible gram capacity of the lithium battery, where the energy density of the lithium battery can reach 200-280Wh/kg. Further, the lithium-rich material in the positive electrode system can significantly increase the gram capacity of the positive electrode and greatly reduce the coating thickness or surface density of the positive-electrode active material layer, and the silicon in the (graphite+silicon) negative electrode system can significantly increase the gram capacity of the negative electrode and greatly reduce the thickness or surface density of the negative-electrode active material layer. Therefore, combining the above advantages, the use of the (LFP+lithium-rich material) positive electrode system with the (graphite+silicon) negative electrode system in the present application can significantly improve the energy density of the lithium battery.

Meanwhile, since the thickness and surface density of the positive-electrode active material layer and the negative-electrode active material layer are greatly reduced, the transmission path of electrons and lithium-ions in the electrode is shortened. It is possible to effectively improve the mass transfer kinetics performance of electrons and lithium-ions and reduce the direct current (DC) internal resistance (DCR) of the lithium battery, thereby helping to improve the energy efficiency, rate performance, and low temperature performance of the lithium battery.

Secondly, the lithium-replenishing effect of the lithium-rich material can also improve the cycle life of the lithium battery to a certain extent. More importantly, the introduction of the lithium-rich material can change composition of the SEI film and reduce the direct current resistance (DCR) of the lithium battery, thereby improving the cycle life and energy efficiency of the lithium battery. The volume of the lithium-rich material will shrink by 20%-70% after the initial charge and de-intercalation of lithium, while the volume of LFP will basically not change after the initial charge and de-intercalation of lithium (the volume change is within 5%). Therefore, due to the volume shrinkage of the lithium-rich material, a new porous structure will be formed in the positive-electrode active material layer of the positive electrode sheet in the present application, which will be conducive to the full infiltration and adsorption of the electrolyte in the positive electrode sheet, improve the liquid retention capacity of the positive electrode sheet, and effectively improve the mass transfer kinetics performance of lithium-ions in the electrode, thereby significantly improving the cycle life of the lithium battery.

Thirdly, by doping elements in the lithium iron phosphate material and the lithium-rich material, the structural stability of the lithium iron phosphate material and the lithium-rich material can be improved respectively, and the combination of the two with the silicon negative electrode can further improve the rate performance of the lithium battery.

Fourthly, since the potential of the silicon negative electrode material versus Li+/Li when embedded with lithium is naturally higher than that of the graphite material, the mixed potential of the silicon negative electrode material and the graphite material is still higher than that of the graphite material. Therefore, the potential of the (graphite+silicon) negative electrode system in the present application is still not close to the lithium deposition potential and causes lithium deposition when charged at a high rate. The safety during fast charging is better than that of a pure graphite negative electrode, which enables the battery to have higher fast charging performance.

### BRIEF DESCRIPTION OF THE DRAWINGS

To more clearly illustrate the technical solutions in the embodiments of the present application, the drawings used in the description of the embodiments will be briefly introduced below. Obviously, the drawings described below are only some embodiments of the present application. For those skilled in the art, other drawings can be obtained based on the drawings without creative work.
FIG. 1 is a test diagram of a DCR value of a lithium battery in Example 1, Comparative Example 1, and Comparative Example 3 of the present application.
FIG. 2 is a test diagram of cycle capacity performance of a lithium battery in Example 1, Comparative Example 1, and Comparative Example 3 of the present application.
FIG. 3 is a cross-sectional view of a positive electrode sheet in the lithium battery in Example 1 of the present application.
FIG. 4 is a cross-sectional view of a positive electrode sheet in the lithium battery in Comparative Example 1 of the present application.

### DETAILED DESCRIPTION

The present application provides a lithium-ion battery with high energy density. The lithium-ion battery with high energy density includes: a positive electrode sheet and a negative electrode sheet, where the positive electrode sheet includes a positive-electrode active material layer and the positive-electrode active material layer includes a positive-electrode active material, and where the negative electrode sheet includes a negative-electrode active material layer and the negative-electrode active material layer includes a negative-electrode active material, where the positive-electrode active material includes a lithium iron phosphate material and a lithium-rich material, and a mass fraction of the lithium-rich material in the positive-electrode active material is 0.2%~8%; the lithium iron phosphate (LFP) material has a chemical formula of Li₁₊ₓFe_{1-y}M_{y}(PO₄)_{1+z}, where 0≤x≤0.1, 0≤y≤0.01, 0≤z≤0.04; M includes at least one of Ti, V, Zr, Nb, Mg, Mo, W, or Al; the lithium-rich material includes at least one of LFO or LNO, where the LFO has a chemical formula of Li₅₊ₐFe_{1-b}Z_{b}O_{4+c}, where 0≤a≤0.5, 0≤b≤0.01, 0≤c≤0.03, and Z includes at least one of Ti, V, Zr, Nb, Mg, Mo, W, or Al; and the LNO has a chemical formula of Li_{2+d}Ni₁₋ₑYₑO_{2+f}, where - 0.5≤d≤0.5, e≥0, -0.5≤f≤0.5, and Y includes at least one of Ti, V, Al, Mg, Mn, or Fe; and the negative-electrode active material includes a graphite material and a silicon negative electrode material, and a mass fraction of the silicon negative electrode material in the negative-electrode active material is 1%~50%.

The initial Coulombic efficiency of the lithium iron phosphate (LFP) material is relatively high (generally above 96%), while the initial Coulombic efficiency of the negative-electrode active material obtained by combining graphite material and silicon negative electrode material is relatively low (generally below 90%). Therefore, the reversible gram capacity of the lithium battery is restricted by the initial Coulombic efficiency of the negative electrode.

The Advantageous effect of the present application is as follows.

Firstly, in the present application, the lithium-rich material is introduced into the positive-electrode active material. The high initial charge gram capacity of the lithium-rich material can compensate for the active lithium consumption caused by the formation of solid electrolyte interphase (SEI) film at the negative electrode in the initial charge process, to increase the amount of active lithium de-intercalation at the negative electrode in the discharge process, thereby increasing the reversible gram capacity of the lithium battery, where the energy density of the lithium battery can reach 200-280Wh/kg. Further, the lithium-rich material in the positive electrode system can significantly increase the gram capacity of the positive electrode and greatly reduce the coating thickness or surface density of the positive-electrode active material layer, and the silicon in the (graphite+silicon) negative electrode system can significantly increase the gram capacity of the negative electrode and greatly reduce the thickness or surface density of the negative-electrode active material layer. Therefore, combining the above advantages, the use of the (LFP+lithium-rich material) positive electrode system with the (graphite+silicon) negative electrode system in the present application can significantly improve the energy density of the lithium battery.

Meanwhile, since the thickness and surface density of the positive-electrode active material layer and the negative-electrode active material layer are greatly reduced, the transmission path of electrons and lithium-ions in the electrode is shortened. It is possible to effectively improve the mass transfer kinetics performance of electrons and lithium-ions and reduce the direct current (DC) internal resistance (DCR) of the lithium battery, thereby helping to improve the energy efficiency, rate performance, and low temperature performance of the lithium battery.

Secondly, the lithium-replenishing effect of the lithium-rich material can also improve the cycle life of the lithium battery to a certain extent. More importantly, the introduction of the lithium-rich material can change composition of the SEI film and reduce the direct current resistance (DCR) of the lithium battery, thereby improving the cycle life and energy efficiency of the lithium battery. The volume of the lithium-rich material will shrink by 20%-70% after the initial charge and de-intercalation of lithium, while the volume of LFP will basically not change after the initial charge and de-intercalation of lithium (the volume change is within 5%). Therefore, due to the volume shrinkage of the lithium-rich material, a new porous structure will be formed in the positive-electrode active material layer of the positive electrode sheet in the present application, which will be conducive to the full infiltration and adsorption of the electrolyte in the positive electrode sheet, improve the liquid retention capacity of the positive electrode sheet, and effectively improve the mass transfer kinetics performance of lithium-ions in the electrode, thereby significantly improving the cycle life of the lithium battery.

Thirdly, by doping elements in the lithium iron phosphate material and the lithium-rich material, the structural stability of the lithium iron phosphate material and the lithium-rich material can be improved respectively, and the combination of the two with the silicon negative electrode can further improve the rate performance of the lithium battery.

Fourthly, since the potential of the silicon negative electrode material versus Li+/Li when embedded with lithium is naturally higher than that of the graphite material, the mixed potential of the silicon negative electrode material and the graphite material is still higher than that of the graphite material. Therefore, the potential of the (graphite+silicon) negative electrode system in the present application is still not close to the lithium deposition potential and causes lithium deposition when charged at a high rate. The safety during fast charging is better than that of a pure graphite negative electrode, which enables the battery to have higher fast charging performance.

In some embodiments, the lithium iron phosphate material has an average primary particle size of 0.1~2µm, and the lithium-rich material has an average primary particle size of 0.8~25µm. The lithium-rich material will shrink in volume after the initial charge and de-intercalation of lithium, and the maximum shrinkage can reach 60%. By controlling the average primary particle size of the lithium-rich material, the size of the new pore structure formed in the positive-electrode active material layer can be adjusted, to form a pore channel structure that is conducive to electrolyte infiltration and has excellent liquid retention performance. So the mass transfer kinetics performance of lithium-ions in the electrode can be improved and the liquid-phase ohmic polarization caused by the electrolyte can be reduced, and the DC internal resistance (DCR) of the battery can be reduced, which helps to improve the rate performance and cycle life of the battery.

In some embodiments, a doping amount of M in the lithium iron phosphate material is 500~8000ppm, and/or a doping amount of Z in the lithium-rich material is 200~5000ppm, and/or a doping amount of Y in the lithium-rich material is 200~5000ppm.

In the embodiment, the lithium iron phosphate material is prepared with a method including the following steps.

The precursor is mixed with the lithium carbonate and deionized water, and then ground, and a doping source containing a doping element is added thereto, to obtain a mixed slurry. The mixed slurry is spray-dried and then sintered in an inert atmosphere, to obtain the lithium iron phosphate material.

The precursor includes iron phosphate. The doping source containing the doping element includes at least one of nano titanium oxide, soluble organic titanium, vanadium pentoxide, ammonium metavanadate, nano zirconium oxide, niobium pentoxide, magnesium oxide, molybdenum oxide, tungsten oxide, or nano aluminum oxide.

In the embodiment, the lithium-rich material is prepared with a method including the following steps.

The precursor is mixed with the lithium carbonate and deionized water, and then ground, and a doping source containing a doping element is added thereto, to obtain a mixed slurry. The mixed slurry is spray-dried and then sintered in an inert atmosphere, to obtain the lithium-rich material.

The precursor includes nickel phosphate; the doping source containing doping elements includes at least one of nano titanium oxide, soluble organic titanium, vanadium pentoxide, ammonium metavanadate, nano zirconium oxide, niobium pentoxide, magnesium oxide, molybdenum oxide, tungsten oxide, nano aluminum oxide, manganese oxide, and iron oxide.

In some embodiments, in the lithium iron phosphate material, M includes any two of Ti, V, and Nb.

In some embodiments, in the lithium iron phosphate material, a doping amount of Ti is 1000~2000ppm, a doping amount of V is 500~1000ppm, and a doping amount of Nb is 200~500ppm.

By selecting the type of M and controlling the doping amount of the doping element, the structural stability of the lithium iron phosphate material can be improved, and the rate performance of the lithium iron phosphate material can also be improved.

In some embodiments, in the lithium-rich material, Z includes any two of Ti, V, and Nb, and the Y includes any two of Ti, V, and Mg.

In some embodiments, in the lithium-rich material, a doping amount of Ti is 1000-2000ppm, a doping amount of V is 500-1000ppm, a doping amount of Nb is 200-500ppm, and a doping amount of Mg is 200-500ppm.

By selecting the type of Z and controlling the doping amount of the doping element, the structural stability of the lithium-rich material can be improved, and the stability of the combination of the lithium-rich material and the lithium iron phosphate material can also be improved, which helps to improve the rate performance of the lithium battery.

Optionally, in some embodiments, the positive-electrode active material layer further includes a positive-electrode conductive agent and a binder, and a mass ratio of the positive-electrode active material, the positive-electrode conductive agent, and the binder is 95~100:0.5~1.5:1~3.

Optionally, in some embodiments, the positive-electrode conductive agent includes at least one of carbon nanotubes (CNT) or conductive carbon black (e.g., SP) and the binder includes polyvinylidene fluoride (PVDF).

In some embodiments, the silicon negative electrode material has an average primary particle size of 0.05~0.5µm, and the graphite material has an average primary particle size of 5~15µm. The silicon negative electrode material will shrink in volume after the initial charge and de-intercalation of lithium, and by controlling the average primary particle size of the silicon negative electrode material and the average primary particle size of the graphite material, the silicon negative electrode material can form a suitable pore structure in the positive-electrode active material layer, forming a pore channel structure that is conducive to electrolyte infiltration and has excellent liquid retention performance. Cooperated with the positive electrode sheet, the transfer of lithium-ions between the positive and negative electrode sheets can be accelerated without lithium deposition, significantly improving the kinetics performance and cycle performance of the lithium battery.

Optionally, the silicon negative electrode material includes at least one of: monocrystalline silicon spherical particles, polycrystalline silicon spherical particles, amorphous silicon spherical particles, monocrystalline silicon quasi-spherical particles, polycrystalline silicon quasi-spherical particles, amorphous silicon quasi-spherical particles, monocrystalline silicon amorphous particles, polycrystalline silicon amorphous particles, or amorphous silicon amorphous particles.

In some embodiments, the mass fraction of the silicon negative electrode material in the negative-electrode active material is 5%~30%.

Optionally, in some embodiments, the negative-electrode active material layer further includes a negative-electrode conductive agent, a thickener, and an adhesive, and a mass ratio of the negative-electrode active material, the negative-electrode conductive agent, the thickener, and the adhesive is 95~98:0.1~1.5:1~2:1~2.

The negative-electrode conductive agent includes conductive carbon black (e.g., SP), the thickener includes sodium carboxymethyl cellulose (CMC), and the adhesive includes styrene-butadiene rubber (SBR).

In some embodiments, the positive electrode sheet has a compaction density of 2.2~2.81g/cm³, and/or the negative electrode sheet has a compaction density of 1.45~1.8g/cm³.

Optionally, the lithium-ion battery in the present application is suitable for the button battery, wound soft-pack battery, stacked soft-pack battery, wound square hard-shell battery, stacked square hard-shell battery, wound cylindrical battery, etc.

Optionally, in some embodiments of the present application, the lithium-ion battery is prepared with a method including the following steps.

### 1. Preparation of positive electrode sheet

In the positive electrode slurry, the mass ratio of lithium iron phosphate (LFP) material, lithium-rich material, carbon nanotube (CNT), conductive graphite (e.g., SP), and polyvinylidene fluoride (PVDF) is 96.0:1.5:0.5:0.5:2.0.

In the first step, mix the positive-electrode conductive agent with the first part of N-methylpyrrolidone (NMP), and stir at a low linear speed of 2.0~5.0m/s for 0.5~3h, to obtain a positive-electrode conductive slurry. In the second step, add the positive-electrode active material (obtained by mixing LFP and lithium-rich material) to the positive-electrode conductive slurry in steps (at least twice) and stir at a low linear speed of 2.0~5.0m/s for 0.5~3h. In the third step, continue stirring at a high linear speed of 10~25m/s for 0.5~3h, to obtain a positive electrode mixed slurry. In the third step, mix polyvinylidene fluoride (PVDF) with the second part of N-methylpyrrolidone (NMP) to obtain a glue solution, and stir at a high linear speed of 10~25m/s for 1~8h, to obtain a premixed slurry. In the fifth step, add N-methylpyrrolidone (NMP) to the premixed slurry and adjust the viscosity to 5000~25000mPa.s, to obtain the positive electrode slurry.

The positive electrode slurry is coated on two surfaces of a carbon-coated aluminum foil (with a thickness of 10~15µm) using a transfer coater or an extrusion coater, and the positive electrode sheet (where the porosity of the positive electrode sheet is 23%~40%) is obtained after drying, calendaring, and slitting.

### 2. Preparation of negative electrode sheet

In the negative electrode slurry, the mass ratio of graphite material, silicon negative electrode material, conductive graphite (e.g., SP), carboxymethyl cellulose (CMC), and styrene-butadiene rubber (SBR) is 96.0:1.5:0.5:0.5:2.0.

In the first step, add the negative-electrode active material (obtained by mixing the graphite material and the silicon negative electrode material) to deionized water in steps (at least twice) to obtain a mixed slurry. In the second step, add the negative-electrode conductive agent (e.g., SP) to the mixed slurry, and stir at a low speed of 2.0~5.0m/s for 0.5~3h for kneading, to obtain a conductive slurry. In the third step, add a thickener (e.g., CMC) to the conductive slurry, and stir at a low speed of 5~15m/s for 0.5~3h to obtain a composite slurry. In the fourth step, add an adhesive (e.g., SBR) to the composite slurry, and stir at a linear speed of 5~20m/s for 1~8h to obtain a premixed slurry. In the fifth step, add deionized water to the premixed slurry and adjust the viscosity to 3000 to 8000mPa.s, to obtain the negative electrode slurry.

The negative electrode slurry is coated on two surfaces of a copper foil (with a thickness of 4.5 to 8µm) using a transfer coater or an extrusion coater, and the negative electrode sheet (where the porosity of the negative electrode sheet is 22%~37%) is obtained after drying, calendaring, and slitting.

### 3. Preparation of the lithium battery

(1) Winding. The positive electrode sheet, the separator, and the negative electrode sheet (where the separator separates the positive and negative electrode sheets, the negative electrode sheet sandwiches the positive electrode sheet, and the lead terminals of the positive and negative electrode tabs are distributed on opposite sides) are stacked in sequence, and then wound manually or automatically/semi-automatically, to obtain a wound core.
(2) Tab welding. The aluminum tab is ultrasonically welded to the positive electrode lead terminal and the nickel tab is ultrasonically welded to the negative electrode lead terminal, and polyethylene terephthalate (PET) protective tape is affixed to the welding point.
(3) Baking. The wound core is placed in a vacuum environment and baked at 90~120°C for 8~24h, to reduce the moisture content of each part inside the wound core to below 400ppm (preferably below 300ppm).
(4) Shelling (sealing with aluminum-plastic film). The aluminum-plastic film is cut into rectangles of a certain length and width, to tightly wrap the wound core, and a sealing machine is used to heat-press and seal the edges along the positive and negative electrode tabs, leaving a liquid injection port on the side.
(5) Liquid injection. An appropriate amount of electrolyte is injected into the aluminum-plastic packaging shell, where the composition of the electrolyte is 1.0M LiPF6+EC/EMC/DEC+VC/FEC/DTD and other additives.
(6) Vacuum standing. The wound core after liquid injection is placed into a vacuum incubator and evacuated to maintain the negative pressure for 0.5~2h, such that the positive/negative electrode sheets and separator can be completely soaked in the electrolyte.
(7) Edge sealing. The last opening of the aluminum-plastic packaging bag is sealed with the sealing machine, and a certain distance is left between the sealing point and the wound core, to facilitate the storage of a small amount of gas generated by the battery after subsequent formation (commonly known as "air bag").
(12) Standing. The sealed battery is placed in a 45±5°C incubator for 24~48h to allow the electrolyte to fully infiltrate the pores of the positive and negative electrodes and the separator again.
(13) Formation with fixture. The lithium battery is placed on a fixture and charged in a formation cabinet at 45±5°C by applying a current to the battery, to charge the battery to 20%SOC~70%SOC, so that the negative electrode reacts with the electrolyte to generate the SEI film and generate a part of gas by-products.
(14) Vacuuming. A vacuum pumping device is used to puncture the air bag and then evacuated the by-product gas generated in the formation stage.
(15) Sealing. The sealing machine is used to perform heat-pressing and sealing near the wound core and the air bag is removed, to make a complete battery cell.
(16) High temperature aging. The sealed battery is placed at 45±5°C and stood for 12~72h, to make the SEI film formed on the surface of the negative electrode more stable.
(17) Capacity grading. Charge continuously at a constant current rate of 0.5C to reach 3.65V, and hold at a constant voltage of 3.65V until the current drops to below 0.05C and the charging is terminated. After standing for 5~30min, discharge at a constant current rate of 0.2C to reach 2.5V; the initial Coulombic efficiency = capacity-grading discharge capacity/(formation charge capacity + capacity-grading re-charge capacity); charge the battery at a constant current of 0.5C to a specific state of charge (SOC) (e.g., 20%SOC to 50%SOC) and store at 25°C.
(18) Open circuit voltage (OCV) test. Before storage at 25°C, test the OCV of the battery, recorded as OCV1; after storage at 25°C for a period of time t (24~72h), test the OCV of the battery again, recorded as OCV2; the self-discharge rate "K-value" of the battery = (OCV1-OCV2)/t. Qualified lithium batteries are selected with the K-value, and batteries with too high K-value are downgraded or scrapped.

The preparation process of the positive and negative electrode sheets of the present application is very simple, and can adopt the conventional slurry-mixing, coating, drying, calendaring, slitting/blanking processes commonly used in the industrial production of the lithium-ion battery. It can effectively ensure the large-scale manufacturability and cost control of the positive and negative electrode sheets, and has excellent economic value.

Optionally, the base film includes at least one of polyethylene (PE) or polypropylene (PP). The base film has a thickness of 5~20µm and a porosity of 0.4~0.6.

Optionally, the base film is provided with a coating layer at least one surface, and the thickness of the coating layer is 1~4µm. The coating layer includes granular rubber and ceramic powder. The granular rubber includes at least one of polyvinylidene fluoride (PVDF), polymethyl methacrylate (PMMA), or polyacrylic acid (PAA), and the particle size of the granular rubber is 0.5~4µm. The ceramic powder includes at least one of boehmite powder or alumina powder, and the particle size of the ceramic powder is 0.5~1µm.

Optionally, the electrolyte includes a lithium salt, a solvent, and an additive, and the solvent includes at least one of ethylene carbonate (EC), diethylene carbonate (DEC), ethyl methyl carbonate (EMC), dimethyl carbonate (DMC), propylene carbonate (PC), or methyl acetate (MA).

The lithium salt includes at least one of lithium hexafluorophosphate (LiPF₆), lithium bis(fluorosulfonyl)imide (LiFSI), lithium bis(trifluoromethanesulfonyl)imide (LiTFSI), lithium bis(oxalato)borate (LiBOB), or lithium difluoro(oxalato)borate (LiODFB).

The additives include but are not limited to at least one of vinylene carbonate (VC), ethylene vinylene carbonate (VEC), propylene sulfite (PS), fluoroethylene carbonate (FEC), ethylene sulfate (DTD), dimethyl sulfate (DMS), diethyl oxalate (DEP), trimethyl borate (TMB), fluorobenzene (FB), biphenyl (BP), or cyclohexylbenzene (CHB).

Optionally, the lithium battery further includes a packaging material. The packaging material includes any one of an aluminum-plastic film, a steel shell, an aluminum shell, and an aluminum alloy shell.

### Embodiment 1

The lithium-ion battery is prepared with a method including the following steps.

### 1. Preparation of positive electrode sheet

In the positive electrode slurry, the mass ratio of lithium iron phosphate material LFP (Li_{1.05}Fe_{0.995}M_{0.005}(PO₄)_{1.02}, where M is Ti and V, the doping amount of Ti is 1500ppm, and the doping amount of V is 700ppm), lithium-rich material LFO (Li_{5.3}Fe_{0.995}Z_{0.005}O_{4.02}, where Z is Ti and Nb, the doping amount of Ti is 1000ppm, and the doping amount of Nb is 500ppm), carbon nanotubes CNT, conductive graphite (e.g., SP), and polyvinylidene fluoride (PVDF) is 96.0:1.5:0.5:0.5:2.0.

In the first step, mix the positive-electrode conductive agent with the first part of N-methylpyrrolidone (NMP), and stir at a low linear speed of 3m/s for 2h, to obtain a positive-electrode conductive slurry. In the second step, add the positive-electrode active material (obtained by mixing LFP and LFO) to the positive-electrode conductive slurry in steps (at least twice) and stir at a low linear speed of 3m/s for 2h. In the third step, continue stirring at a high linear speed of 15m/s for 2h, to obtain a positive electrode mixed slurry. In the third step, mix polyvinylidene fluoride (PVDF) with the second part of N-methylpyrrolidone (NMP) to obtain a glue solution, and stir at a high linear speed of 16m/s for 4h, to obtain a premixed slurry. In the fifth step, add N-methylpyrrolidone (NMP) to the premixed slurry and adjust the viscosity to 15000mPa.s, to obtain the positive electrode slurry.

The positive electrode slurry is coated on two surfaces of a carbon-coated aluminum foil (where the thickness of the aluminum foil is 12µm) using a transfer coater, and the positive electrode sheet (where the porosity of the positive electrode sheet is 32%) is obtained after drying, calendaring, and slitting.

### 2. Preparation of negative electrode sheet

In the negative electrode slurry, the mass ratio of graphite material, silicon negative electrode material, conductive graphite (e.g., SP), carboxymethyl cellulose (CMC), and styrene-butadiene rubber (SBR) is 96.0:1.5:0.5:0.5:2.0.

In the first step, add the negative-electrode active material (obtained by mixing graphite material and silicon negative electrode material) to deionized water in steps (at least twice) to obtain a mixed slurry. In the second step, add the negative-electrode conductive agent (e.g., SP) to the mixed slurry, and stir at a low speed of 4m/s for 1h for kneading, to obtain a conductive slurry. In the third step, add a thickener (e.g., CMC) to the conductive slurry, and stir at a low speed of 10m/s for 2h, to obtain a composite slurry. In the fourth step, add an adhesive (SBR) to the composite slurry, and stir at a linear speed of 12m/s for 4h, to obtain a premixed slurry. In the fifth step, add deionized water to the premixed slurry and adjust the viscosity to 6000mPa.s, to obtain a negative electrode slurry.

The negative electrode slurry is coated on two surfaces of a copper foil (with a thickness of 5µm) using a transfer coater, and the negative electrode sheet (where the porosity of the negative electrode sheet is 30%) is obtained after drying, calendaring, and slitting.

### 3. Preparation of the lithium battery

(1) Winding. The positive electrode sheet, the base film, and the negative electrode sheet (where the base film separates the positive and negative electrode sheets, the negative electrode sheet sandwiches the positive electrode sheet, and the lead terminals of the positive and negative electrode tabs are distributed on opposite sides) are stacked in sequence, and then wound manually or automatically/semi-automatically, to obtain a wound core. A coating layer is disposed on the surface of the base film, and the thickness of the coating layer is 2µm. The coating layer includes polyvinylidene fluoride (PVDF) (with a particle size of 0.5~4µm) and boehmite powder (with a particle size of 0.5~1µm).
(2) Tab welding. The aluminum tab is ultrasonically welded to the positive electrode lead terminal and the nickel tab is ultrasonically welded to the negative electrode lead terminal, and PET protective tape is affixed to the welding point.
(3) Baking. The wound core is placed in a vacuum environment and baked at 100°C for 16h, to reduce the moisture content of each part inside the wound core to less than 400ppm.
(4) Shelling (sealing with aluminum-plastic film). The aluminum-plastic film is cut into rectangles of a certain length and width, to tightly wrap the wound core, and a sealing machine is used to heat-press and seal the edges along the positive and negative electrode tabs, leaving a liquid injection port on the side.
(5) Liquid injection. An appropriate amount of electrolyte is injected into the aluminum-plastic packaging shell, where the composition of the electrolyte includes 1.0M LiPF6+EC/EMC/DEC+VC/FEC/DTD and other additives.
(6) Vacuum standing. The wound core after liquid injection is placed into a vacuum incubator and evacuated to maintain the negative pressure for 1 hour, such that the positive/negative electrode sheets and separator can be completely soaked in the electrolyte.
(7) Edge sealing. The last opening of the aluminum-plastic packaging bag is sealed with the sealing machine, and a certain distance is left between the sealing point and the wound core, to facilitate the storage of a small amount of gas generated by the battery after subsequent formation (commonly known as "air bag").
(12) Standing: The sealed battery is placed in a 45±5°C incubator for 36h to allow the electrolyte to fully infiltrate the pores of the positive and negative electrodes and the separator again.
(13) Formation with fixture. The lithium battery is placed on a fixture and charged in a formation cabinet at 45±5°C by applying a certain current to charge the battery to 50%SOC, so that the negative electrode reacts with the electrolyte to generate a SEI film and generate a part of gas by-products.
(14) Vacuuming. A vacuum pumping device is used to puncture the air bag and then evacuate the by-product gas generated in the formation stage.
(15) Sealing. The sealing machine is used to perform heat-pressing and sealing near the wound core and the air bag is removed, to make a complete battery cell.
(16) High temperature aging. The sealed battery is placed at 45±5°C and stood for 45h, to make the SEI film formed on the surface of the negative electrode more stable.
(17) Capacity grading. Charge continuously at a constant current rate of 0.5C to reach 3.65V, and hold at a constant voltage of 3.65V until the current drops to below 0.05C and the charging is terminated. After standing for 20min, discharge at a constant current rate of 0.2C to reach 2.5V; the initial Coulombic efficiency = capacity-grading discharge capacity/(formation charge capacity+capacity-grading re-charge capacity); charge the battery at a constant current of 0.5C to a specific SOC (e.g., 40%SOC) and store at 25°C.
(18) OCV test. Before storage at 25°C, test the OCV of the battery, recorded as OCV1; after storage at 25°C for a period of time t (24~72h), test the OCV of the battery again, recorded as OCV2; the self-discharge rate "K-value" of the lithium battery = (OCV1-OCV2)/t. Qualified lithium batteries are selected with the K-value, and batteries with too high K-value are downgraded or scrapped.

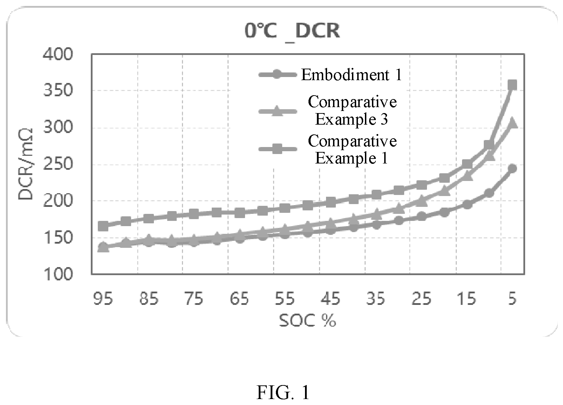

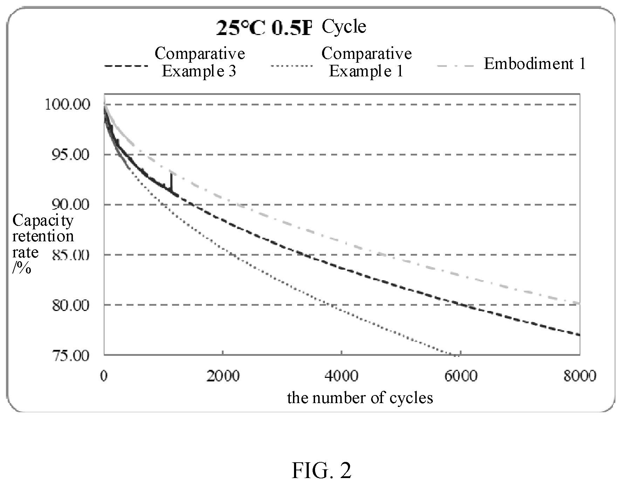

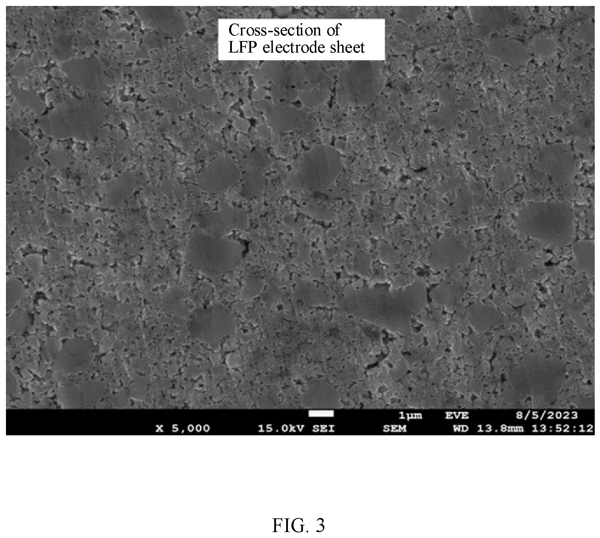

The test diagram of the DCR value and the test diagram of cycle capacity performance of the lithium battery in this embodiment are shown in FIG. 1 and FIG. 2 respectively. The cross-sectional diagram of the positive electrode sheet of the lithium battery in this embodiment is shown in FIG. 3.

### Embodiment 2

The difference between this embodiment and Embodiment 1 is that in the positive electrode slurry, the mass ratio of LFP, LFO, CNT, SP, and PVDF is 95.0:2.5:0.5:0.5:2.0. Other steps and parameter settings are consistent with those in Embodiment 1.

### Embodiment 3

The difference between this embodiment and Embodiment 1 is that in the positive electrode slurry, the mass ratio of LFP, LFO, CNT, SP, and PVDF is 91.0:6.5:0.5:0.5:2.0. Other steps and parameter settings are consistent with those in Embodiment 1.

### Embodiment 4

The difference between this embodiment and embodiment 1 is that in the negative electrode slurry, the mass ratio of the graphite material, the silicon negative electrode material, SP, CMC, and SBR is 91.0:6.5:0.5:0.5:2.0. Other steps and parameter settings are consistent with those in Embodiment 1.

### Embodiment 5

The difference between this embodiment and Embodiment 1 is that in the negative electrode slurry, the mass ratio of the graphite material, the silicon negative electrode material, SP, CMC and SBR is 86.0:10.5:0.5:1.5:1.5. Other steps and parameter settings are consistent with those in Embodiment 1.

### Embodiment 6

The difference between this embodiment and Embodiment 1 is that the positive-electrode active material used in the positive electrode slurry is lithium iron phosphate material LFP (Li₁Fe_{0.999}M_{0.001}(PO₄)_{1.04}, where M is Ti and Nb, the doping amount of Ti is 1000ppm and the doping amount of Nb is 200ppm) and lithium-rich material LFO (Li₅Fe_{0.09}Z_{0.01}O_{4.03}, where Z is Ti and V, the doping amount of Ti is 2000ppm, and the doping amount of V is 1000ppm). Other steps and parameter settings are consistent with those in Embodiment 1.

### Embodiment 7

The difference between this embodiment and Embodiment 1 is that the positive-electrode active material used in the positive electrode slurry is lithium iron phosphate material LFP (Li_{1.01}Fe_{0.99}M_{0.01}(PO₄)_{1.01}, where M is V and Nb, the doping amount of V is 1000ppm, and the doping amount of Nb is 500ppm) and lithium-rich material LFO (Li_{5.5}Fe_{0.99}Z_{0.01}O_{4.3}, where Z is V and Nb, the doping amount of V is 500ppm, and the doping amount of Nb is 200ppm). Other steps and parameter settings are consistent with those in Embodiment 1.

### Embodiment 8

The difference between this embodiment and Embodiment 1 is that the lithium-rich material is LNO (Li_{2.2}Ni_{0.95}Y_{0.05}O_{2.1}, where Y is V and Mg, and the doping amount of V is 500ppm and the doping amount of Mg is 200ppm). Other steps and parameter settings are consistent with those in Embodiment 1.

### Embodiment 9

The difference between this embodiment and Embodiment 1 is that the average primary particle size of the lithium-rich material LFO is 0.5µm, and the average primary particle size of the lithium iron phosphate material is 3µm. Other steps and parameter settings are consistent with those in Embodiment 1.

### Embodiment 10

The difference between this embodiment and Embodiment 1 is that the compaction density of the positive electrode sheet is 3g/cm³. Other steps and parameter settings are consistent with those in Embodiment 1.

### Embodiment 11

The difference between this embodiment and Embodiment 1 is that the average primary particle size of the silicon negative electrode material is 1.5µm, and the average primary particle size of the graphite material is 30µm. Other steps and parameter settings are consistent with those in Embodiment 1.

### Embodiment 12

The difference between this embodiment and Embodiment 1 is that the compaction density of the negative electrode sheet is 2g/cm³. Other steps and parameter settings are consistent with those in Embodiment 1.

### Comparative Example 1

The difference between this embodiment and Embodiment 1 is that the positive-electrode active material does not contain the lithium-rich material, and the negative-electrode active material does not contain the silicon negative electrode material.

Specifically, in the positive electrode slurry, the mass ratio of LFP, CNT, SP, and PVDF is 97.0:0.5:0.5:2.0; in the negative electrode slurry, the mass ratio of graphite, SP, CMC, and SBR is 96.5:0.5:1.5:1.5.

Other steps and parameter settings are consistent with those in Embodiment 1.

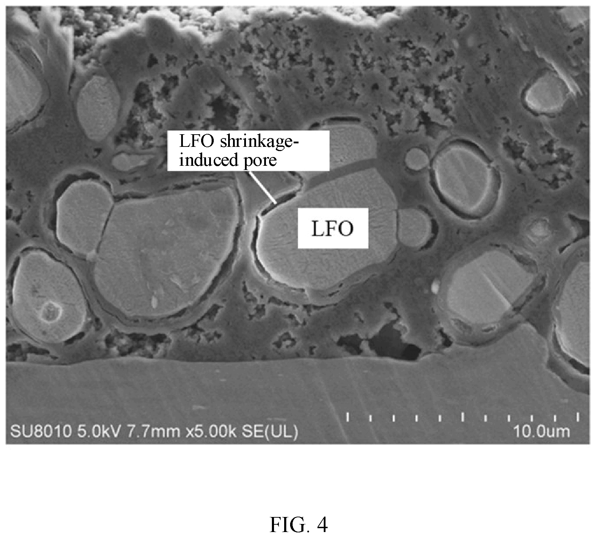

The test diagram of the DCR value and the test diagram of cycle capacity performance of the lithium battery in this comparative example are shown in FIG. 1 and FIG. 2 respectively. The cross-sectional diagram of the positive electrode sheet of the lithium battery in this comparative example is shown in FIG. 4.

### Comparative Example 2

The difference between this embodiment and Embodiment 1 is that the positive-electrode active material does not contain the lithium-rich material. Specifically, in the positive electrode slurry, the mass ratio of LFP, CNT, SP, and PVDF is 97.0:0.5:0.5:2.0. Other steps and parameter settings are consistent with those in Embodiment 1.

### Comparative Example 3

The difference between this embodiment and Embodiment 1 is that the negative-electrode active material does not contain the silicon negative electrode material. Specifically, in the negative electrode slurry, the mass ratio of graphite, SP, CMC, and SBR is 96.5:0.5:1.5:1.5. Other steps and parameter settings are consistent with those in Embodiment 1.

The test diagram of the DCR value and the test diagram of cycle capacity performance of the lithium battery in this comparative example are shown in FIG. 1 and FIG. 2 respectively.

### Comparative Example 4

The difference between this comparative example and Example 1 is that neither the lithium iron phosphate material nor the lithium-rich material contains doping elements. Other steps and parameter settings are consistent with those in Embodiment 1.

### Test Method

### I. Energy density test

The lithium batteries in the above embodiments and comparative examples are tested for energy density. The specific test method is as follows. Weigh the weight of the lithium battery, recorded as m; place the battery in a fixture, apply a force of 3000N, charge the single battery at a constant current of 0.33C to reach 3.65V, and continue charging at a constant voltage of 3.65V until the current drops to 0.05C; leave for 30min, discharge at a constant current of 0.33C to reach 2.5V, leave for 30min, and repeat for 3 cycles; calculate the discharge capacity (in Ah) and energy E (average value of three cycles), and the discharge energy density = E/m (in Wh/kg).

### II. Test of gram capacity of electrode sheet

The electrode sheets in the above-mentioned embodiments and comparative examples are subjected to the test of the initial charge and discharge gram capacity, and the specific test method is as follows. For the test of the initial charge gram capacity of the positive electrode, the positive electrode sheet is taken and one side is wiped with a wet wipe until the bright foil is exposed, and after the electrode sheet is dried, the electrode sheet is punched out with a punching machine and weighed, where the mass is recorded as m1. In addition, the bright aluminum foil is punched out with the punching machine and weighed, where the mass is recorded as m2. Then, the mass of coating m3=m1-m2. The punched electrode sheet is taken and made into a button battery together with a lithium sheet, an electrolyte, and a separator. The button battery is placed on a Land test cabinet for testing. The test steps are as follows. Charge at a constant current of 0.1C to reach 3.75V, and then charge at a constant voltage of 3.75V until the current drops to 0.05C, where the charge capacity is recorded as q1. The initial charge gram capacity of the positive electrode = q1/(m1×the proportion of the active material in the positive electrode coating); stand for 10min, and discharge at a constant current of 0.1C to reach 2.0V, where the discharge capacity is recorded as q2. The initial discharge (gram) capacity of the positive electrode = q2/(m1×the proportion of the active material in the positive electrode coating).

The process of the test of the initial charge gram capacity of the negative electrode and the process of preparation of the button battery is basically the same as that of the positive electrode. The mass of the punched negative electrode sheet is recorded as m4, the mass of the bright copper foil is m5, and the mass of the negative electrode coating is m6. The test steps are as follows. Charge at a constant current of 0.1C to reach 0.005V, where initial charge capacity is recorded as q3. The initial charge gram capacity of the negative electrode = q3/(m1×the proportion of the active material in the negative electrode coating). Discharge at 0.1C to reach 0.5V, where the initial discharge capacity is recorded as q4. The initial discharge gram capacity of the negative electrode = q4/(m1×the proportion of the active material in the negative electrode coating).

### III. Rate performance test

The lithium batteries in the above embodiments and comparative examples are tested for rate performance. The specific test method is as follows. The lithium battery is preprocessed at 25±2°C, and the steps are as follows. Charge at 0.5C constant current and constant voltage (CC-CV), with a cut-off voltage of 3.65V and a cut-off current of 0.05C; rest for 5min; rest for 5min; discharge at a constant current of 0.5C, with a cut-off voltage of 2.5V. Repeat this charge-discharge process for 13 times. Perform charge-discharge process at 0.1C once, and discharge capacity in this process is taken as the initial capacity, denoted as Q0.

Test the capacity retention rate at a rate of 1C. The battery is fully charged at 0.5C constant current and constant voltage, with a cut-off voltage of 3.65V, and then discharged at a constant current rate of 1C, and the discharge capacity Q1 of the battery is recorded. Calculate the 1C capacity retention rate = Q1/Q0×100%.

### IV. Cycle performance test

The lithium batteries in the above embodiments and comparative examples are subjected to a cycle performance test, and the specific test method is as follows. At 25°C and a voltage range of 2.5 to 3.65V, the prepared battery is charged and discharged at a rate of 1C. In the charge process, charge at a constant current of 1C to reach 3.65V, and then charge at a constant voltage of 3.65V until the current dropped to 0.05C. In the discharge process, discharge at a constant current of 1C to reach 2.5V. Repeat for 1000 cycles, and the cycle capacity retention rate is recorded.

### V. DC internal resistance test

The lithium batteries in the above embodiments and comparative examples are subjected to a DC internal resistance test. The specific test method is as follows. At 25°C, the batteries in the embodiments and comparative examples are adjusted to 95%SOC, and discharged at a current rate of 1C for 10 seconds. The battery voltage U1 and current I before discharge and the battery voltage U2 after 10 seconds of discharge are recorded. The DC internal resistance (DCR) is calculated according to the formula R=(U1-U2)/I.

**Table 1**

| Number | Energy density /Wh.kg⁻¹ | Reversible (gram) capacity of positive electrode /mAh.g⁻¹ | Initial charge (gram) capacity of positive electrode /mAh.g⁻¹ | Initial charge (gram) capacity of negative electrode /mAh.g⁻¹ | Rate performance (1C capacity retention rate) | Capacity retention rate after 1000 cycles |
|---|---|---|---|---|---|---|
| Embodiment 1 | 193 | 149.7 | 166.3 | 403 | 96.0% | 93.0% |
| Embodiment 2 | 200 | 155.3 | 172.5 | 403 | 96.8% | 93.5% |
| Embodiment 3 | 228 | 177.3 | 197.0 | 403 | 98.4% | 94.0% |
| Embodiment 4 | 195 | 149.7 | 166.3 | 417.5 | 96.3% | 92.6% |
| Embodiment 5 | 205 | 149.7 | 166.3 | 490 | 97.1% | 92.0% |
| Embodiment 6 | 193 | 149.7 | 166.3 | 403 | 95.5% | 92.8% |
| Embodiment 7 | 193 | 149.7 | 166.3 | 403 | 95.0% | 92.7% |
| Embodiment 8 | 191 | 148 | 164.4 | 403 | 95.8% | 93.2% |
| Embodiment 9 | 189 | 146.7 | 166.3 | 403 | 94.5% | 90.5% |
| Embodiment 10 | 191 | 147.5 | 166.3 | 403 | 92.7% | 89.0% |
| Embodiment 11 | 190 | 149.7 | 166.3 | 395 | 92.1% | 92.3% |
| Embodiment 12 | 192 | 149.7 | 166.3 | 399 | 91.6% | 88.6% |
| Comparative Example 1 | 180 | 145.0 | 161.0 | 350 | 94.0% | 90.0% |
| Comparative Example 2 | 188 | 145.0 | 161.0 | 403 | 94.8% | 91.0% |
| Comparative Example 3 | 185 | 149.7 | 166.3 | 350 | 94.3% | 91.5% |
| Comparative Example 4 | 193 | 149.7 | 166.3 | 403 | 94.9% | 92.5% |

In combination with Embodiments 1 to 8, Comparative Examples 1 to 4, and Table 1, it can be seen that by using the lithium iron phosphate material and the lithium-rich material as the positive-electrode active material, and using the graphite material and the silicon negative electrode material as the negative-electrode active material, and by doping suitable elements in the lithium iron phosphate material and the lithium-rich material, the energy density, rate performance, and low-temperature performance of the lithium battery can be significantly improved. The cooperation of the lithium iron phosphate material and the lithium-rich material can form a pore channel structure in the positive-electrode active material layer that is conducive to lithium-ion transmission and electron transmission, which is beneficial to improving the cycle performance of the electrolyte for the lithium battery. Finally, the cooperation of the positive-electrode active material and the negative-electrode active material in the present application can significantly improve the charging and discharging safety performance of the lithium battery.

In combination with Examples 1, 9 to 10 and Table 1, it can be seen that by controlling the average primary particle size of the lithium-rich material in the positive-electrode active material to be larger than the average primary particle size of the lithium iron phosphate material, the size of the pore structure formed in the positive-electrode active material layer can be adjusted, and the positive electrode sheet can be adjusted to obtain a suitable surface density and form a pore channel structure that is conducive to electrolyte infiltration and has excellent liquid retention performance. Further, the cooperation of the two types of particle positive-electrode active materials helps to improve the compaction density of the positive electrode sheet. The above combined effects can improve the mass transfer kinetics performance in the electrode, reduce the liquid-phase ohmic polarization caused by the electrolyte, and thereby reduce the DC internal resistance (DCR) of the battery, which helps to improve the rate performance, cycle life, and energy density of the battery.

In combination with Example 1, Examples 11 to 12 and Table 1, it can be seen that by controlling the average primary particle size of the silicon negative electrode material and the average primary particle size of the graphite material in the negative-electrode active material, the negative electrode sheet can have a compaction density range that cooperates well with the positive electrode sheet, and the negative-electrode active material layer with a suitable pore channel structure can be formed, to avoid lithium deposition in the negative electrode in the charge and discharge process of the lithium battery. In cooperation with the positive electrode sheet, the kinetics performance and cycle performance of the lithium battery can be significantly improved.

## Claims

1. A lithium-ion battery with high energy density, comprising: a positive electrode sheet and a negative electrode sheet, wherein the positive electrode sheet comprises a positive-electrode active material layer and the positive-electrode active material layer comprises a positive-electrode active material, and wherein the negative electrode sheet comprises a negative-electrode active material layer and the negative-electrode active material layer comprises a negative-electrode active material, wherein
the positive-electrode active material comprises a lithium iron phosphate material and a lithium-rich material, and a mass fraction of the lithium-rich material in the positive-electrode active material is 0.2%~8%;
the lithium iron phosphate (LFP) material has a chemical formula of Li₁₊ₓFe_{1-y}M_{y}(PO₄)_{1+z}, wherein 0≤x≤0.1, 0≤y≤0.01, 0≤z≤0.04;
M comprises at least one of Ti, V, Zr, Nb, Mg, Mo, W, or Al;
the lithium-rich material comprises at least one of LFO or LNO, wherein
the LFO has a chemical formula of Li₅₊ₐFe_{1-b}Z_{b}O_{4+c}, wherein 0≤a≤0.5, 0≤b≤0.01, 0≤c≤0.03, and Z comprises at least one of Ti, V, Zr, Nb, Mg, Mo, W, or Al; and
the LNO has a chemical formula of Li_{2+d}Ni₁₋ₑYₑO_{2+f}, wherein -0.5≤d≤0.5, e≥0, -0.5≤f≤0.5, and Y comprises at least one of Ti, V, Al, Mg, Mn, or Fe; and
the negative-electrode active material comprises a graphite material and a silicon negative electrode material, and a mass fraction of the silicon negative electrode material in the negative-electrode active material is 1%~50%.

2. The lithium-ion battery of claim 1, wherein the lithium iron phosphate material has an average primary particle size of 0.1~2µm, and the lithium-rich material has an average primary particle size of 0.8~25µm.

3. The lithium-ion battery of claim 1, wherein a doping amount of M in the lithium iron phosphate material is 500~8000ppm, and/or a doping amount of Z in the lithium-rich material is 200~5000ppm, and/or a doping amount of Y in the lithium-rich material is 200~5000ppm.

4. The lithium-ion battery of claim 3, wherein in the lithium iron phosphate material, M comprises any two of Ti, V, and Nb.

5. The lithium-ion battery of claim 4, wherein in the lithium iron phosphate material, a doping amount of Ti is 1000~2000ppm, a doping amount of V is 500~1000ppm, and a doping amount of Nb is 200~500ppm.

6. The lithium-ion battery of claim 3, wherein in the lithium-rich material, Z comprises any two of Ti, V, and Nb, and Y comprises any two of Ti, V, and Mg.

7. The lithium-ion battery of claim 6, wherein in the lithium-rich material, a doping amount of Ti is 1000-2000ppm, a doping amount of V is 500-1000ppm, a doping amount of Nb is 200-500ppm, and a doping amount of Mg is 200-500ppm.

8. The lithium-ion battery of claim 1, wherein the silicon negative electrode material has an average primary particle size of 0.05~0.5µm, and the graphite material has an average primary particle size of 5~15µm.

9. The lithium-ion battery of claim 1, wherein the silicon negative electrode material comprises at least one of: monocrystalline silicon spherical particles, polycrystalline silicon spherical particles, amorphous silicon spherical particles, monocrystalline silicon quasi-spherical particles, polycrystalline silicon quasi-spherical particles, amorphous silicon quasi-spherical particles, monocrystalline silicon amorphous particles, polycrystalline silicon amorphous particles, or amorphous silicon amorphous particles.

10. The lithium-ion battery of claim 1, wherein the mass fraction of the silicon negative electrode material in the negative-electrode active material is 5%~30%.

11. The lithium-ion battery of any one of claims 1 to 10, wherein the positive electrode sheet has a compaction density of 2.2~2.81g/cm³, and/or the negative electrode sheet has a compaction density of 1.45~1.8g/cm³.

12. The lithium-ion battery of claim 1, wherein the positive-electrode active material layer further comprises a positive-electrode conductive agent and a binder, and a mass ratio of the positive-electrode active material, the positive-electrode conductive agent, and the binder is 95~100:0.5~1.5:1~3.

13. The lithium-ion battery of claim 12, wherein the positive-electrode conductive agent comprises at least one of carbon nanotubes (CNT) or conductive carbon black (SP) and the binder comprises polyvinylidene fluoride (PVDF).

14. The lithium-ion battery of claim 1, wherein the negative-electrode active material layer further comprises a negative-electrode conductive agent, a thickener, and an adhesive, and a mass ratio of the negative-electrode active material, the negative-electrode conductive agent, the thickener, and the adhesive is 95~98:0.1~1.5:1~2:1~2.

15. The lithium-ion battery of claim 13, wherein the negative-electrode conductive agent comprises conductive carbon black (SP), the thickener comprises sodium carboxymethyl cellulose (CMC), and the adhesive comprises styrene-butadiene rubber (SBR).
